# EUROPÄISCHE PATENTSCHRIFT

(11) **EP 0 999 484 B1**
(45) Veröffentlichungstag und Bekanntmachung des Hinweises auf die Patenterteilung: **08.12.2004**
(21) Anmeldenummer: 99120439.7
(22) Anmeldetag: 14.10.1999
(51) Int. Cl.: G05B 17/02, G05B 13/04

(54) **Trimmverfahren zum Abgleich eines Simulationssystems mit einem geregelten Referenzsystem**
Trimming method for aligning a simulation system with a controlled reference system
Procédé d'équilibrage d' un système de simulation avec un système de référence commandé

(30) Priorität: 03.11.1998 DE 19850612
(43) Veröffentlichungstag der Anmeldung: 10.05.2000
(73) Patentinhaber: EADS Deutschland GmbH, 85521 Ottobrunn (DE)
(72) Erfinder: Schulz, Gerhard, Dr., 83646 Bad Tölz/Wackersberg (DE); Meyer, Thomas, 83052 Bruckmühl (DE)

(56) Entgegenhaltungen:
- EP-A- 0 650 891
- EP-A- 0 731 398
- EP-A- 0 809 162
- DE-A- 19 645 556
- US-A- 5 651 341

## Beschreibung

Die Erfindung betrifft ein Trimmverfahren zum Abgleich eines steuerbaren, geregelten Systems mit einem Referenzsystem und Trimmsystem zur Trimmung des geregelten Systems. Die Erfindung ist insbesondere anwendbar auf ein reales Flugzeug simulierendes Referenzsystem mit einem Regler-Modell und einem Strecken-Modell.

Zur Analyse von Flugversuchen bei der Erprobung von Flugzeugen sind sowohl an Bord der Flugzeuge als auch in einer Bodenstation Telemetrie-Einrichtungen vorgesehen. Mit diesen können Daten, die an Bord des Flugzeugs mittels entsprechender Sensoren ermittelt werden, während eines Flugmanövers zu einer mit den Flugzeug-Systemen bzw. dem oder den Piloten in Verbindung stehenden Bodenstation gesendet werden. Üblicherweise werden diese Daten nach jedem Flugmanöver einer Analyse unterzogen und dabei beispielsweise mit zuvor in Bodenversuchen ermittelten Versuchsdaten oder mit einer während der Flugmanöver in einer Bodenstation ablaufenden Flugsimulation verglichen.

Bei diesem Verfahren nach dem Stand der Technik werden nur die Sensordaten, die in den Flugzeug-Systemen ermittelt und aufbereitet worden sind, übertragen, insbesondere die Sensordaten der Piloteneingabe-Vorrichtungen, der zur Flugregelung erforderlichen Luftdaten- und Initial-Sensorik und die Sensordaten der Stellantriebe. Bei der Flugerprobung von geregelten Flugzeugen ist allerdings der Zustand des Flugreglers im Verlauf des oder nach dem jeweiligen Flugmanöver unbekannt.

Ein Nachteil des Verfahrens nach dem Stand der Technik ist, daß Folgerungen aus den telemetrisch übertragenen Sensordaten auf Zustände des Flugreglers nur begrenzt möglich sind. Es sind daher Abschätzungen und vergleichende Analysen in bezug auf die während der Flugmanöver vorliegenden Reglerzustände durchzuführen, die insbesondere bei der während eines Flugversuches zur Verfügung stehenden Zeit ungenau sind.

Die US-A-5 651 341 offenbart eine Optimierung einer Regelung einer dynamisch betriebenen Vorrichtung mit folgenden Bestandteilen beschrieben:
- Adaption oder Angleichung der dynamischen Eigenschaften der Vorrichtung und des Vorrichtungs-Modells zusammen mit dem Regler bzw. dem Regler-Modell hinsichtlich der Input-/ Output-Verhältnisses (Spalte 1, Zeilen 44 bis 52);
- Optimierung der Regelgrößen ("control parameters") des Vorrichtungs-Modells;
- Simulation des adaptierten Regler-Modells mit dem Vorrichtungs-Modell (Spalte 1, Zeilen 60 bis 62) durch Optimierung der Reglerparameter (Spalte 2, Zeilen 5 bis 10) über die Ermittlung des Input-/Output-Verhältnisses zwischen der Vorrichtung ("practical engine") und dem Vorrichtungsmodell, in der D1 "engine model" genannt (D1: Spalte 9, Zeile 6 bis Spalte 10, Zeile 29);
- Verwendung der Simulationsergebnisse im Regler-Modell (Spalte 1, Zeilen 63 bis 65).

In der DE 196 45 556 A sind Verfahren zur Optimierung eines nichtlinearen Flugreglers oder von Lenkgesetzen eines Flugkörpers mittels einer wissensbasierten Signalverarbeitungseinheit in verschiedenen Alternativen offenbart:
- Unter Verwendung eines Referenzmodells, das ein gewünschtes Verhalten des Regelkreises aus einem Regler und einer Regelstrecke wiedergibt, wird die Differenz des gewünschten Verhaltens mit dem tatsächlichen Verhalten einem ersten neuronalen Netzwerk zur Modellierung der Regelstrecke zugeführt, an dem die Stellgröße des Reglers aufgeschaltet ist. Weiterhin wird ein zweites neuronales Netzwerk verwendet, mit dem die Abhängigkeit der Parameter des Reglers vom Flugzustand modelliert wird. Durch das Trainieren beider neuronaler Netzwerke können die Parameter eines optimalen Reglers ermittelt werden.
- Ein optimaler Regler wird durch die Verwendung einer Mehrzahl von in einem geeigneten Arbeitspunkt arbeitenden Reglem angenähert, wobei mittels eines Überlagerungselements mit Zugehörigkeits-Funktionen das näherungsweise Stellsignal ermittelt wird. Aus den Zugehörigkeits-Funktionen wird der optimale Regler mittels einer unscharfen Logik in Abhängigkeit der Zustandsgrößen erzeugt (Spalte 14, Zeile 42 bis 54).
- In einem Netzwerk wird eine Optimierung von Zugehörigkeitsfunktionen in Abhängigkeit von dem Fehler zwischen optimaler und tatsächlicher Stellgröße vorgenommen und daraufhin die für den optimalen Regler die Koeffizienten einer Linearkombination für den scharfen Regler mit der Methode der kleinsten Fehlerquadrate ermittelt. Dies kann auch mittels eines neuronalen Netzwerkes erfolgen.

Es ist daher die Aufgabe der Erfindung, ein Trimmverfahren zum Abgleich der Reglerzustände generell eines geregelten Systems mit denen eines Referenzsystems bereitzustellen, das möglichst automatisch und während des Prozesses auf der Basis der bekannten Sensordaten durchführbar ist.

Ein Vorteil der Erfindung ist, daß diese ohne weitere Analysen Daten über Reglerzustände bereitstellt, so daß die jeweils noch verfügbaren Regler-Reserven bestimmt werden können und damit technisch beurteilt werden kann, ob die Fortführung des Flugerprobungs-Programms mit noch höheren Anforderungen an den Flugregler technisch vertretbar ist. Die

Freigabe für weiterführende Flugmanöver kann ggf. bereits nach verhältnismäßig kurzer Zeit nach der Beendigung des vorhergehenden Manövers erteilt werden. Dadurch wird eine deutliche Reduzierung der Flugzeit und damit der Flugversuchs-Kosten erreicht.

Weiterhin wird der Arbeitsaufwand für das Bodenpersonal deutlich verringert, da die Darstellung der Flugversuchs- und Analyse-Ergebnisse im geforderten Format ohne weiteres Zutun durch das Bodenpersonal bereitgestellt werden kann.

Die Aufgabe wird mit den Merkmalen der unabhängigen Ansprüche gelöst. Alternative Ausführungsformen sind in deren Unteransprüchen angegeben.

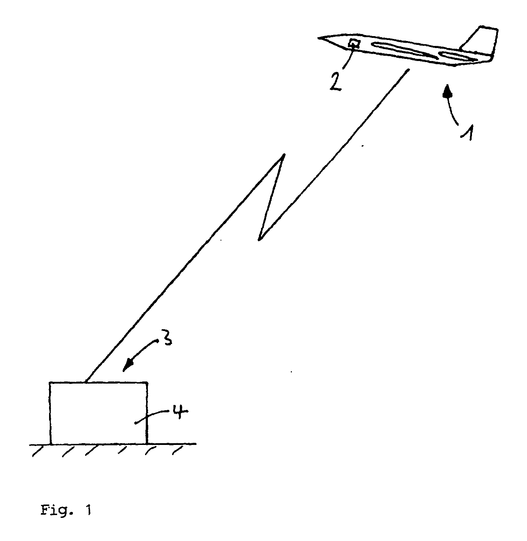

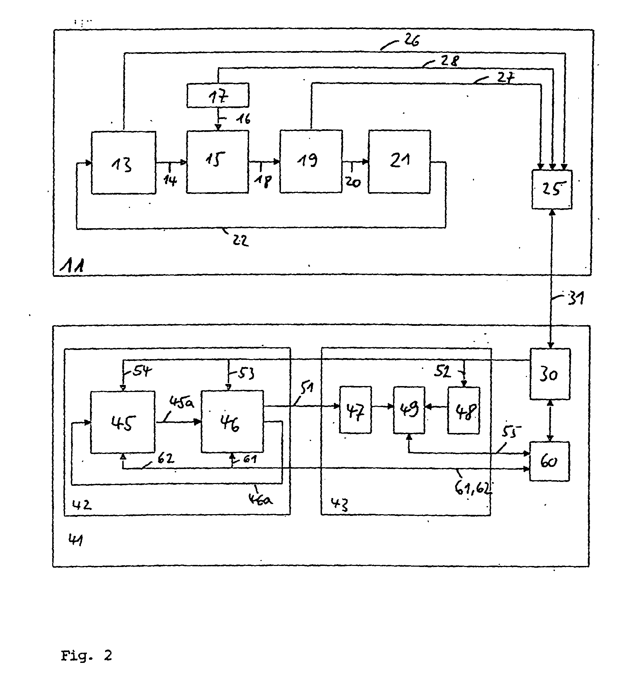

Im folgenden wird die Erfindung anhand der beigefügten Figuren 1 und 2 beschrieben, die zeigen:
- Fig. 1: Eine schematische Darstellung der typischen Situationen bei einem Flugversuch, in der ein Flugzeug mit einer Bodenstation über Telemetrie-Einrichtungen miteinander kommunizieren und
- Fig. 2: ein schematisches Blockschaltbild über die funktionalen Abläufe bei dem erfindungsgemäßen Verfahren bzw. der erfindungsgemäßen Vorrichtung, und
- Fig. 3: ein Ablaufschema des erfindungsgemäßen Simulationsverfahren.

Die Fig. 1 zeigt ein Flugzeug 1 oder ein Referenzsystem mit einer Regelschleife, wobei das Referenzsystem 1 insbesondere ein Flugzeug darstellt. Die Erfindung kann sich jedoch generell auf Referenzsysteme beziehen, die geregelte Systeme sind oder darstellen. Bei dem Referenzsystem der Figur 1 handelt es sich um ein geregeltes Flugzeug 1, das eine an Bord befindliche Telemetrie-Einrichtung 2 aufweist, die unter anderem Sensordaten des Flugzeugs 1 an eine Bodenstation 3 übermittelt. Die Bodenstation 3 umfaßt eine Telemetrie-Einrichtung 4, mit der die Daten der flugzeugseitigen Telemetrie-Einrichtung 2 empfangen werden können. In der Telemetrie-Einrichtung 4 der Bodenstation 3 werden diese Daten analysiert und ausgewertet, beispielsweise um dem Piloten des Flugzeugs 1 die Freigabe für weitere Flugmanöver zu erteilen.

In der Figur 2 ist mit Bezugszeichen 11 das Referenzsystem bzw. Flugzeug-Funktionen des Flugzeugs 1 in funktionaler Hinsicht in Form einer Regelschleife dargestellt. Die Flugzeug-Funktionen 11 weisen eine Sensorik 13 auf, die eine Luftdaten- und eine Inertialdaten-Sensorik umfaßt. Die Sensorik 13 kann auch entsprechende Sensormodelle umfassen, wenn das Referenzsystem 1 selbst ein Simulationssystem oder ein Modell eines realen Systems ist. Die mittels der Sensorik 13 erfaßten und mittels einer dieser zugeordneten Datenverabeitung verarbeiteten Daten 14 werden über entsprechende Leitungen an einen Flugregler 15 geschickt. Der Flugregler 15 empfängt neben den Daten 14 unter anderem auch Daten 16 von einer Eingabevorrichtung oder Piloten-Eingabevorrichtung 17. Diese umfassen insbesondere den Pilotenknüppel und die Pedale sowie zugehörige Sensoren, von denen die Daten bzw. Signale 16 an den Flugregler 15 geschickt werden. Der Flugregler 15 kann aus mehreren redundanten Kanälen gebildet sein. Zur Überwachung und Konsolidierung dieser Kanäle sowie jeweils von Daten bzw. Signalen 14 bzw. 16 sind in Flugregler 15 sogenannte Voting- und Monitoring-Funktionen vorgesehen, die gleichartige oder ähnliche Eingangsdaten konsolidieren. Der innere Zustand des Flugreglers 15 wird unter anderem bestimmt durch die Daten, die in den verschiedenen Voting- und Monitoring-Funktionen, durch die jeweils vorliegenden Regelgrößen, durch die jeweils gewählten Verstärkungs-Faktoren, durch die Parameter von Beschränkungsgliedern jeweils in den verschiedenen Kanälen des Flugreglers 15 vorliegen. Die Ausgangsdaten des Flugreglers 15 sind unter anderem Stellsignale oderdaten 18, die an die verschiedenen Stellantriebe 19 der Steuerklappen geschickt werden. Die Stellantriebe 19 können eine entsprechende Sensorik zur Erfassung der Positionsdaten von Steuerventilen oder der Steuerflächen umfassen. Die Steuerklappenbewegungen verursachen auf das Flugzeug wirkende Luftkräfte. Das Verhalten des realen Flugzeugs ist in der Fig. 2 mit dem Bezugszeichen 21 bezeichnet. Das Flugzeugverhalten 21 hat Rückwirkung 22 auf die Sensorik 13, die die jeweilige inertiale Fluglage und den strömungstechnischen Flugzustand erfaßt.

An Bord des Flugzeugs ist weiterhin eine Flugzeug-Telemetrieeinrichtung 25 vorgesehen, die in Datenaustausch mit anderen Flugzeug-Funktionen 11 steht. Insbesondere werden Sensorsignale oder -daten 26 von der Sensorik 13 sowie Sensorsignale oder -daten 27 von der an den Stellantrieben 19 vorgesehenen Sensorik an die Flugzeug-Telemetrieeinrichtung 25 geschickt. Weiterhin empfängt die Flugzeug-Telemetrieeinrichtung 25 auch die Sollvorgaben 28 von der Piloten-Eingabevorrichtung 17. Die Flugzeug-Telemetrieeinrichtung 25 steht in Funkverbindung mit einer Boden-Telemetrieeinrichtung 30 der Bodenstation 4. Über die Flugzeug-Telemetrieeinrichtung 25 und die Boden-Telemetrieeinrichtung 30 können die Daten 31 ausgetauscht werden, die zur Durchführung und Auswertung des Flugversuches erforderlich sind. Insbesondere empfängt die Boden-Telemetrieeinrichtung 30 dabei die Daten 26, 27, 28. Wie bereits voranstehend ausgeführt worden ist, können der Telemetrieeinrichtung 25 auch Daten von Sensoren zugeführt werden, die Zustände an anderen Flugzeug-Systemen messen, z.B. am Triebwerk, am Fahrwerk, an der Flugzeugstruktur.

Die Bodenstation 4 umfaßt Bodenstations-Funktionen 41, die in der Figur 2 dargestellt sind. Diese umfassen unter anderem eine Flugzeug-Simulation 42, die die Form einer Regelschleife hat, ein Berechnungsmodul für Vergleichsoperationen 43 sowie Funktionen der Boden-Telemetrieeinrichtung 30. In der Flugzeug-Simulation 42 werden im wesentlichen die Funktionen der Sensorik 13, des Flugreglers 15, der Piloteneingabevorrichtung 17, der Stellantriebe 19 des realen Flugzeugs nachgebildet und umfassen dementsprechend ebenfalls einen Flugregler oder ein Flugregler-Modell 45 und ein Flugzeug-Modell 46. Der Flugregler 45 kann funktional oder gerätetechnisch identisch mit oder ähnlich zu dem im Flugzeug vorhandenen Flugregler 45 oder ein Modell desselben sein. Insbesondere kann der Flugregler 45 der Flugzeug-Simulation 42 im Vergleich zum Flugregler 15 des realen Flugzeugs 1 in verschiedenen Programmiersprachen, und nach verschiedenen Verfahren hergestellt sowie auf verschiedener Rechner-Hardware implementiert sein. Das Flugzeug-Modell 46 umfaßt vorzugsweise Sensormodelle und Stellantriebsmodellle, die die Sensorik 13 und die Stellantriebe 19 nachbilden. Das Flugzeug-Modell 46 kann auch ein Modell oder Modelle anderer Flugzeug-Systeme, z.B. des Triebwerks, umfassen. In dem Flugzeug-Modell 46 wird mit Hilfe der flugmechanischen Bewegungsgleichungen und von aerodynamischen Datensätzen das Verhalten 21 des realen Flugzeugs nachgebildet. Von dem Flugregler 45 werden entsprechende Daten 45a an das Flugzeug-Modell 46 geschickt, von wo aus Daten 46a an das Flugregler-Modell 45 rückgeführt werden.

Sowohl die Flugzeug-Funktionen 11 als auch die Flugzeug-Simulation 42 können auch anders strukturiert sein oder auch anders aufgebaut sein als in der Fig. 2 dargestellt. Wesentlich ist jedoch, daß es sich um ein geregeltes Flugzeug 1 handelt, das einen Flugregler aufweist, der sowohl an Bord des Flugzeugs 1 als auch in Form eines Modells in der Bodenstation 3 vorliegt. Weiterhin ist an Bord des geregelten Flugzeugs 1 auch Sensorik erforderlich, um die äußeren und inneren Zustände des Flugzeugs 1 zu erfassen und an die Bodenstation 3 zu übermitteln.

Die Bodenstations-Funktionen 41 umfassen weiterhin ein Berechnungsmodul 43 für Vergleichsoperationen, in dem Daten 47 über den Flugzustand des Flugzeug-Modells 46 mit Daten 48 über den Flugzustand des fliegenden Flugzeugs 1 in einem Vergleichsmodul 49 verglichen werden. Die Daten 47 entsprechen im wesentlichen Daten 51, die von dem Flugzeug-Modell 46 zum Berechnungsmodul 43 gelangen. Ebenso entsprechen die Daten 48 über den Flugzustand des fliegenden Flugzeugs 1 im wesentlichen Daten 52, die von der Boden-Telemetrieeinrichtung 30 an das Berechnungsmodul 43 gelangen. Die Daten 52 entsprechen im wesentlichen zum einen den Daten 27, die von der Sensorik 19 der Stellantriebe des realen Flugzeugs 1 an die Flugzeugseitige Telemetrie-Einrichtung 25 geschickt werden, und zum anderen Daten von Sensoren anderer Flugzeugsysteme, die zur Flugzeug-seitigen Telemetrie-Einrichtung 25 gelangen.

Weiterhin schickt die Boden-Telemetrieeinrichtung 30 Daten 53 zum Flugzeug-Modell 46. Die Daten 53 entsprechen dabei im wesentlichen den Daten 14 der Sensorik 13. An das Flugregler-Modell 45 gelangen Daten 54 von der Boden-Telemetrieeinrichtung 30, die im wesentlichen den von der Piloten-Eingabevorrichtung 17 die Flugzeug-Telemetrieeinrichtung 25 gelangenden Soll-Vorgaben 28 entsprechen oder mit diesen identisch sind, die in Form der Daten 31 über die Funkverbindung der Boden-Telemetrieeinrichtung 30 gelangen. Von dem Vergleichsmodul 49 werden Daten 55 an eine Steuereinheit 60 geschickt. Zwischen der Steuereinheit 60 und dem Flugzeug-Modell 46 werden Daten 61 ausgetauscht.

Alle Funktionen oder alle Funktionsmodule der Bodenstations-Funktionen 41 sind über nicht gezeigte Datenverbindungen mit Auswertungs-Einheiten bzw. Auswertungs-Modulen verbunden.

Jede in der Fig. 2 gezeigte Funktion bzw. jeder Funktionsblock der Fig. 2 kann als Hardware-mäßige Einheit, als Software-Modul oder als beides zugleich realisiert sein. Die in der Fig. 2 gezeigten Datenverbindungen können dementsprechend mittels bloßer Daten-Übergabevorgänge innerhalb von Software-Modulen oder mittels reeller elektrischer, optischer oder anderer Datenverbindungen realisiert sein.

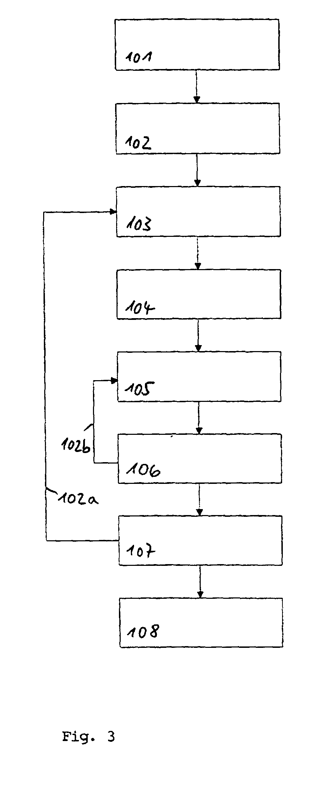

Im folgenden wird die Erfindung anhand der Fig. 3 beschrieben:

Das Ziel des erfindungsgemäßen Trimmverfahrens ist, die internen Zustände einerseits des Flugreglers 15 und andererseits des Flugregler-Modells 45 hinreichend in Übereinstimmung zu bringen, d.h. z.B. die Parameter einzelner Reglerfunktionen, wie z.B. Integratoren, Beschränkungsglieder, Verstärkungsfaktoren des Flugregler-Modells 45 hinreichend in Übereinstimmung mit denjenigen des Flugreglers 15 zu bringen. Nach einem Flugmanöver sind diese zunächst unterschiedlich.Die meisten Parameter, die innerhalb des Flugreglers 15 ermittelt und verarbeitet werden, können während eines Fluges normalerweise nicht abgegriffen oder ermittelt werden. Somit können nicht einfach entsprechende Funktionen des Flugregler-Modells 45 auf einen definierten, mit dem internen Zustand des Flugreglers 15 übereinstimmenden Zustand gesetzt werden. Vielmehr werden Flugregler 15 und das Flugregler-Modell 45 erfindungsgemäß über Anpaßvorgänge oder Trimmvorgänge weitgehend in Übereinstimmung gebracht.

Im Ausgangszustand 101 fliegt das reale Flugzeug 1 und die entsprechenden Flugzeug-Funktionen 11 sind aktiv. Gleichzeitig dazu fliegt die Flugzeug-Simulation 42 virtuell in einer simulierten Umgebung und insbesondere in einer simulierten Atmosphäre. Die Soll-Vorgaben 28 der Piloten-Eingabevorrichtung 17 im fliegenden Flugzeug 1 sind durchgeschaltet, d.h. diese werden über die Flugzeug-Telemetrieeinrichtung 25, die Boden-Telemetrieeinrichtung 30 in Form der Daten 54 dem Flugregler-Modell 45 direkt zugeführt. Der Flugregler 15 im Flugzeug 1 arbeitet also auf der Basis im wesentlichen derselben Soll-Vorgaben 16 bzw. 28 wie das Flugregler-Modell 45. Dabei hängt es vom Flugzeugtyp ab, nach welchen Größen der Pilot das Flugzeug 1 kommandiert, d.h. in Form welcher Größen die Soll-Vorgaben 28 an den Flugregler 15 geschickt und von diesem verarbeitet werden. Die Soll-Vorgaben 28 können beispielsweise Drehraten sein. Bei anderen Flugzeugen können die Soll-Vorgaben 28 eine Kombination von Drehwinkeln und Anstellwinkeln oder eine Kombination von Drehwinkeln und der Vertikalbeschleunigung sein.

Aufgrund der verschiedenen Zustände des Flugreglers 15 und des Flugregler-Modells 45 weichen in einem allgemeinen Ausgangszustand beispielsweise die Positionen, die Fluglagen oder allgemein Flugzustandsgrößen des realen Flugzeugs 1 und der Flugzeug-Simulation 42 voneinander ab. Die unterschiedlichen Regler-Zustände werden dabei beispielsweise durch die Ungenauigkeiten der Parameter des Flugzeug-Modells 42 oder auch durch die Unterschiede in der realen Atmosphäre und der simulierten atmosphärischen Umgebung, die dem Flugzeug-Modell 46 zugeordnet ist, verursacht. Durch diese Unterschiede kann insbesondere bei der Konsolidierung von Eingangsdaten ein Zustand im Flugregler-Modell 45 entstehen, der sich deutlich von dem im Flugregler 15 unterscheidet. Die unterschiedlichen Zustände im Flugregler 15 einerseits und dem Flugregler-Modell 45 andererseits führen zu unterschiedlichen Flugzuständen und insbesondere Fluglagen des realen Flugzeugs 1 und des Flugzeug-Modells 46. Die Fluglage wird vorzugsweise in Form sogenannter Euler-Winkel oder in Form von Quaternionen bestimmt, die die Lage eines Flugzeugs mittels eines Flugzeug-festen Koordinatensystems in Bezug zu einem raumfesten initialen Koordinatensystem beschreibt.

Der Trimmvorgang wird normalerweise zwischen zwei Flugmanövern durchgeführt und am Boden ausgelöst. Die Auslösung des Trimmvorgangs kann beispielsweise durch Drücken eines Bedienknopfes ausgelöst werden. Hierbei kann der Trimmknopf einer in der Bodenstation 3 vorgesehenen Eingabevorrichtung (nicht gezeigt) in Betracht kommen. Die Auslösung 102 des Trimmverfahrens wird der Steuereinheit 60 zugeführt, die dann die zwei nachstehend beschriebenen Schleifen steuert, wobei die zweite Schleife innerhalb der ersten abläuft, also mit dieser verschachtelt ist.

In der ersten Schleife 102a werden die die Fluglage bestimmenden Größen, also die Eulerwinkel bzw. die Quaternionen, die momentanen Höhen sowie die Machzahlen oder die Geschwindigkeitsbeträge des Flugzeug-Modells 46 den entsprechenden Größen des realen Flugzeugs 1 gleichgesetzt (Schritt 104). Dazu werden die Fluglage-Größen, die im Flugzeug 1 mittels der Sensorik 13 ermittelt werden, über die Telemetrie-Einrichtungen 25, 30 an die Steuereinheit 60 übermittelt, die das Flugzeug-Modell 46 dann über die Leitung 61 mit den entsprechenden Daten versorgt. Bei diesem Schritt bleiben jedoch die Werte für die Strömungswinkel des Flugzeug-Modells 46, alpha und beta oder dazu äquivalente Größen, trotz Eingriffs in das Flugzeug-Modell 46 unverändert. Die Gleichsetzung(Schritt103) eines Teils der die Fluglage bestimmenden Größen, nämlich der momentanten Höhen sowie deren Machzahlen bzw. Geschwindigkeitsbeträge erfolgt mittels eines Eingriffs zumindest in einen Teil der Anfangsbedingungen der Bewegungs-Differentialgleichung des Flugzeug-Modells 46. Die darin enthaltenen Drehraten werden jedoch nicht verändert, da sie - wie zuvor ausgeführt - mit den Regelgößen zusammenhängen. Diese wird in jedem Iterationsschritt gelöst, um in Abhängigkeit der Eingangsgrößen oder Regler-Stellsignale 45a den Flugzustand des Flugzeugs-Modells 46 im jeweiligen Iterationsschritt zu bestimmen.

Der Flugregler 15 wie auch der Flugregler oder das Flugregler-Modell 45 der Flugzeug-Simulation 42 regeln üblicherweise die Strömungswinkel alpha und beta oder äquivalente Größen, wie z.B. die VertikalBeschleunigung statt alpha. Diese Größen sind also Regelgrößen. Weiterhin gibt es Größen, die über die Regelschleife mit diesen Größen zusammenhängen, z.B. je nach Regelkonzept des Flugzeugs die Drehraten. Dadurch, daß diese Größen, also die Regelgrößen und auch die mit diesen zusammenhängenden Größen, im Flugzeug-Modell belassen werden, wird also in den Flugregler bzw. das Flugregler-Modell 45 nicht eingegriffen. Auf diese Weise wird der Flugregler oder das Flugregler-Modell 45 nicht gestört. Andernfalls würde die Gefahr bestehen, daß durch Eingriffe in die aus dem Flugregler oder Flugregler-Modell 45 und dem Flugzeug-Modell 46 gebildete Flugregelungsschleife der Flugregler oder das Flugregler-Modell 45 zu Reaktionen veranlaßt wird, die das Trimmverfahren wesentlich erschweren würden.

Da nach dieser Maßnahme zwar die Fluglagen, die Höhen und die Geschwindigkeitsbeträge des Flugzeug-Modells 46 in diejenigen des realen Flugzeugs 1 übergeführt worden sind, jedoch die Strömungswinkel oder dazu äquivalente Größen beim Flugzeug-Modell 46 und dem realen Flugzeug 1 unterschiedlich sind, entfernt sich das Flugzeug-Modell 46 von dem realen Flugzeug 1 (Schritt 104) zumindest in Bezug auf die Flugzustands-Größen. Während des Trimmverfahrens und insbesondere während dieses Entfernungsvorgangs werden die Strömungswinkel alpha, beta oder dazu äquivalente Größen, die zum einen mittels der Sensorik 13 erfaßt und zum anderen im Flugregler oder Flugregler-Modell 45 ermittelt worden sind, als Teil der Daten 47 bzw. 48 der Vergleichseinrichtung 49 zugeführt, die die Differenzwerte der Zustandsgrößen feststellt und diese der Steuereinheit 60 zuführt (104).

Sobald die Differenzwerte einen vorbestimmten Schwellwert überschritten haben, werden in der zweiten Schleife (1 02b) die Sollvorgaben der Piloten-Eingabevorrichtung 17, die auf den Flugregler oder das Flugregler-Modell 45 durchgeschaltet werden, in Richtung auf eine Verringerung dieser Differenzwerte verändert. Die Veränderung (durch den Eingriff 105) erfolgt mittels der Steuereinheit 60, die von der Piloten-Eingabevorrichtung 17 auf den Flugregler oder das Flugregler-Modell 45 durchgeschalteten Soll-Vorgaben 28 mit entsprechenden Vorgabe-Differenzwerten beaufschlagt und die beaufschlagten Soll-Vorgaben dem Flugregler oder dem Flugregler-Modell 45 zuführt (Schritt 105). Dabei können Steuersignale oder Trimmgrößen beaufschlagt werden. Die Beaufschlagung, d. h. die Zuführung der beaufschlagten Signale an den Flugregler oder das Flugregler-Modell 45 erfolgt vorzugsweise über eine vorbestimmte Anzahl von Iterationsschritten. Die Beaufschlagung erfolgt je nach ihrer Dauer oder Stärke solange, bis das durch diese in ihrer Fluglage veränderte Flugzeug-Modell die entstandene Abweichung ein vorbestimmtes Maß reduziert (Schritt 106). Dieses Maß kann im speziellen Anwendungsfall - abhängig von der Instabilität der Regelstrecke - sehr gering sein und hängt auch von dem Maß der entstandenen Abweichung bzw. der erforderlichen Annäherungsgeschwindigkeit zwischen Flugzeug-Simulation 42 und Referenzsystem 1 ab. Vorzugsweise bleiben zusätzlich die Pilotenkommandos 17 bzw. 54 in voller Wirkung. In diesem Fall wirkt der Eingriff 105 nur korrigierend auf den sich ergebenden Flugpfad ein. In anderen Fällen könnten jedoch die Pilotenkommandos 17 bzw. 54 auch in der Flugzeug-Simulation 42 zeitweise abgeschaltet sein. Nach einer vorgegebenen Zeit oder einer vorbestimmten Anzahl von Iterationsschritten oder auch nach Überschreiten eines Schwellwerts für die Differenzwerte von Zustandsgrößen erfolgt eine erneute Zuführung der aufgeschalteten Soll-Vorgaben 28 für den Flugregler oder das Flugregler-Modell 45 der Flugzeug-Simulation 42. Welches Kriterium dem Zeitpunkt des erneuten Aufschaltens von Vorgabe-Differenzwerten zugrunde gelegt wird, hängt vom Anwendungsfall ab und ist hinsichtlich einer möglichst guten Konvergenz des Trimmverfahrens zu wählen. Diese zweite Schleife mit der Messung der Differenzwerte der Zustandsgrößen (Schritt106) und wird einige Male wiederholt. Die Zahl der Wiederholungen der zweiten Schleife innerhalb der ersten Schleife kann für das Trimmverfahren fest vorgegeben sein oder sich daraus ergeben, wie stark die Abweichungen der Zustandsgrößen nach einem oder mehreren Iterationsschritten ist, d.h. wie gut die Zustandsgrößen konvergieren.

In einem Schritt 107 wird eine Konvergenzprüfung vorgenommen. Solange das Konvergenz-Kriterium nicht erfüllt ist, wird die erste Schleife durch Veränderung von Fluglage-Größen, des Geschwindigkeitsbetrags und der Höhe von neuem gestartet, wobei in der ersten Schleife auch wiederum die zweite Schleife zumindest einmal durchlaufen wird.

Das Trimmverfahren wird nach dem zumindest einmaligen Erreichen des Endes der ersten Schleife 102a beendet, sobald das vorzugsweise am Ende jeder ersten Schleife 102a abgeprüfte Konvergenz-Kriterium erfüllt ist. Dieses besteht vorzugsweise darin, daß die Differenzen der Strömungswerte nach einer bestimmten Zeitdauer oder einer Anzahl von Iterationsschritten einen Schwellwert bzw. jedem Vergleichswert entsprechenden Schwellwerten nicht überschreiten.

Die zweiten Schleifen 102b werden vorzugsweise innerhalb des Durchlaufens der ersten Schleife 102a durchlaufen, wobei die zweiten Schleifen 102b mindestens einmal durchlaufen werden. Alternativ dazu kann auch vorgesehen sein, daß die zweiten Schleifen 102b hinter dem Durchlaufen einer ersten Schleife 102a erfolgt.

Mit dem Erreichen des Endes 108 ist der Trimmvorgang abgeschlossen und das eigentlich zu testende Flugmanöver kann durchgeführt werden. Durch das erfindungsgemäße Trimmverfahren ist sichergestellt, daß die Parameter des Flugreglers oder des Flugregler-Modells 45 der Flugzeug-Simulation 42 weitgehend in Übereinstimmung mit den Parametem des Flugreglers 15 der Flugzeug-Funktionen oder des Referenzsystems 11.

Die Schritte 103 bis 107 laufen jeweils vorzugsweise in einem Iterations- oder Berechnungszyklus ab. Je nach Auslegung der Bodenstations-Funktionen 41 können diese Schritte jeweils auch in mehreren Berechnungszyklen durchgeführt werden. Dabei können die Schritte 101 bis 108 von der Steuereinheit 60 gesteuert werden.

Der angestrebte Abgleich kann auch bereits mit der ersten Durchführung des Schritts 103 erreicht sein. Dementsprechend wird in Zusammenhang mit der Erfindung unter dem Gedanken des Wiederholen der Schritte 103 und 104 auch der Gedanke gemeint, daß diese Schritte 103 und 104 kein einziges Mal wiederholt werden müssen.

Alternativ zum beschriebenen Ablauf des Trimmverfahrens kann die zumindest eine zweite Schleife auch seriell hinter zumindest einer ersten Schleife ablaufen. Dabei kann insbesondere auch vorgesehen sein, daß jede Schleife eine vorbestimmte Anzahl von Abläufen durchführt.

Bei dem erfindungsgemäßen Trimmverfahren muß nicht ein Flugregler-Modell 45 einer Bodenstation 3 mit dem Flugregler 15 eines fliegenden Flugzeugs abgeglichen werden. Es kann auch ein Flugregler-Modell 45 einer Bodenstation 3 mit einem anderen Flugregler-Modell abgeglichen werden. Dies kann insbesondere bei der Verifikation von Modellen von großer Wichtigkeit sein. In jedem Fall handelt es sich darum, daß ein Flugregler-Modell 45 gegen ein Referenzsystem 1 unter Zeitbedingungen und insbesondere in Realzeit, vorzugsweise während oder zwischen der Durchführung von Versuchen abgeglichen wird.

Das erfindungsgemäße Verfahren wird vorzugsweise automatisch durchgeführt. Es kann jedoch auch manuell durchgeführt werden, beispielsweise in dem jeder Schritt 103, 104, 105, 106 einzeln durch manuelle Betätigung ausgeführt wird. Es sind jedoch auch Kombinationen dieser Alternativen möglich.

Das erfindungsgemäße Trimmverfahren kann allgemein für Flugzeuge angewendet werden, d.h. für Starrflügler, Drehflügler, sowie unbemannte Fluggeräte. Darüber hinaus kann das Trimmverfahren auch für generell geregelte Systeme verwendet werden, mit denen ein entsprechendes Simulationssystem abzugleichen ist, ohne daß Zustands- und/oder Regelgrößen im laufenden Prozeß abgegriffen werden müssen, um interne Parameter des geregelten und simulierten Systems zu ermitteln.

## Patentansprüche

1. Trimmverfahren zum Abgleich eines ersten steuerbaren, geregelten Referenzsystems (11) mit einem Regler (15) und einer Eingabe-Vorrichtung zur Eingabe von Soll Vorgaben (28) zur Beeinflussung von Regelgrößen, mit einem zweiten, das erste Referenzsystem (11) simulierenden Referenzsystem (42) mit einem Regler (45) und einem Modell (46) der Regelstrecke des ersten Referenzsystems (11),
wobei in dem ersten Referenzsystem mittels einer Sensorik (13) Zustandsgrößen erfasst werden, die Regelgrößen und weitere Zustandsgrößen umfassen,
wobei in einem Ausgangszustand der Regler (45) des zweiten Referenzsystems (42) auf der Basis von vom ersten Referenzsystem übermittelten Steuer-Vorgaben arbeitet,
**dadurch gekennzeichnet, dass**
- die weiteren Zustandsgrößen in dem im zweiten Referenzsystem vorgesehenen Modell (46) in die weiteren Zustandsgrößen des ersten Referenzsystems überführt werden (102a), und
- nachfolgend die dem Regler (45) des zweiten Referenzsystems (42) zugeführten Steuer-Vorgaben (54) über eine vorbestimmte Zeit um Werte in die Richtung beaufschlagt werden, die zu einer Verringerung der aufgrund der Überführung der weiteren Zustandsgrößen (1 02a) entstandenen Abweichung von Zustandsgrößen führt.

2. Trimmverfahren zum Abgleich eines ersten steuerbaren, geregelten Referenzsystems (11) mit einem-zweiten, das erste Referenzsystem (11) simulierenden Referenzsystem (42) nach dem Patentanspruch 1, **dadurch gekennzeichnet, dass** während der Überführung der weiteren Zustandsgrößen (102a) und/oder während der Beaufschlagung der Steuer-Vorgaben die Steuer-Eingaben für das erste Referenzsystem wirksam bleiben.

3. Trimmverfahren zum Abgleich eines ersten steuerbaren, geregelten Referenzsystems (11) mit einem zweiten, das erste Referenzsystem (11) simulierenden Referenzsystem (42) nach dem Patentanspruch 1 oder 2, **dadurch gekennzeichnet dass** die Überführung der weiteren Zustandsgrößen (102a) und/oder die Beaufschlagung der Steuer-Vorgaben bei Erreichen eines Konvergenz-Kriteriums beendet wird.

4. Trimmverfahren zum Abgleich eines ersten steuerbaren, geregelten Referenzsystems (11) mit einem zweiten, das erste Referenzsystem (11) simulierenden Referenzsystem (42) nach dem Patentanspruch 1, 2 oder 3, **dadurch gekennzeichnet, dass** die Überführung der weiteren Zustandsgrößen als Schleife (102a) innerhalb der Beaufschlagung der Steuer-Vorgaben für das erste Referenzsystem (102b) erfolgt.

5. Trimmverfahren zum Abgleich eines ersten steuerbaren, geregelten Referenzsystems (11) mit einem zweiten, das erste Referenzsystem (11) simulierenden Referenzsystem (42) nach einem der voranstehenden Patentansprüche 1 bis 3, **dadurch gekennzeichnet, dass** die Überführung der weiteren Zustandsgrößen als Schleife. (102a) zeitlich nach der Beaufschlagung der Steuer-Vorgaben für das erste Referenzsystem (102b) erfolgt.

6. Trimmverfahren zum Abgleich eines ersten steuerbaren, geregelten Referenzsystems (11) mit einem zweiten, das erste Referenzsystem (11) simulierenden Referenzsystem (42) nach einem der voranstehenden Patentansprüche, **dadurch gekennzeichnet, dass** die Initiierung der Überführung der weiteren Zustandsgrößen (102a) manuell erfolgt

7. Trimmverfahren zum Abgleich eines ersten steuerbaren, geregelten Referenzsystems (11) mit einem zweiten, das erste Referenzsystem (11) simulierenden Referenzsystem (42) nach einem der voranstehenden Patentansprüche 1 bis 3, **dadurch gekennzeichnet, dass** die Regelstrecke des ersten Referenzsystems ein real fliegendes Flugzeug ist und die Zustandsgrößen Flug-Zustandsgrößen sind.

8. Trimmverfahren zum Abgleich eines ersten steuerbaren, geregelten Referenzsystems (11) mit einem zweiten, das erste Referenzsystem (11) simulierenden Referenzsystem (42) nach dem Patentanspruch 7, **dadurch gekennzeichnet, dass** die Steuer-Vorgaben die Strömungswinkel des Flugzeugs beeinflussen.

9. Trimmverfahren zum Abgleich eines ersten steuerbaren, geregelten Referenzsystems (11) mit einem zweiten, das erste Referenzsystem (11) simulierenden Referenzsystem (42) nach dem Patentanspruch 7, **dadurch gekennzeichnet, dass** die Steuer-Vorgaben zumindest eine Beschleunigung oder zumindest eine Drehrate des Flugzeugs beeinflussen.

10. Trimmverfahren zum Abgleich eines ersten steuerbaren, geregelten Referenzsystems (11) mit einem zweiten, das erste Referenzsystem (11) simulierenden Referenzsystem (42) nach dem Patentanspruch 7, 8 oder 9, **dadurch gekennzeichnet, dass** die weiteren Zustandsgrößen Eulerwinkel, eine momentane Flughöhe, die Machzahl und/oder ein Geschwindigkeitsbetrag ist.

11. System zur Durchführung eines Trimmverfahrens zum Abgleich eines ersten steuerbaren, geregelten Referenzsystems (11) mit einem Regler (15), einer Sensorik (13) zur Erfassung von Zustandsgröße, die Regelgrößen und weitere Zustandsgrößen umfassen, und einer Eingabe-Vorrichtung zur Eingabe von Soll Vorgaben (28) zur Beeinflussung von Regelgrößen,
wobei das Trimmsystem ein zweites, das erste Referenzsystem (11) simulierendes Referenzsystem (42) mit einem Regler (45) und einem Modell (46) der Regelstrecke des ersten Referenzsystems (11) umfasst, wobei in einem Ausgangszustand der Regler (45) auf der Basis von vom ersten Referenzsystem übermittelten Steuer-Vorgaben arbeitet,
**dadurch gekennzeichnet, dass**
- das Trimmsystem Funktionen für eine Betriebsart umfasst, mit der die weiteren Zustandsgrößen in dem im zweiten Referenzsystem vorgesehenen Modell (46) in die weiteren Zustandsgrößen des ersten Referenzsystems (11) überführt werden (102a), und
- ein Berechnungsmodul (43) zur Ermittlung einer Abweichung der Zustandsgrößen in dem ersten (11) und dem zweiten (42) Referenzsystem vorgesehen ist und die dem Regler (45) des zweiten Referenzsystems (42) Zugeführten Steuer-Vorgaben (54) unabhängig von den Steuer-Vorgaben des ersten Referenzsystems (11) veränderbar sind, um die Steuer-Vorgaben über eine vorbestimmte Zeit um Werte in die Richtung zu beaufschlagen, die zu einer Verringerung der aufgrund der Überführung der weiteren Zustandsgrößen (102a) entstandenen Abweichung von Zustandsgrößen führt.

12. System zur Durchführung eines Trimmverfahrens nach dem Patentanspruch 11, **dadurch gekennzeichnet, dass**
- die Regelstrecke des Trimmsystems ein Flugzeugmodell ist und das Trimmsystem zur Adaption von Parametern des Flugzeugmodells an das Verhalten eines realen Flugzeugs vorgesehen ist, und
- das Trimmsystem funktional mit einer Telemetrie-Einrichtung (25) in Verbindung steht und von dieser Steuer-Vorgaben (28) von der Eingabe-Vorrichtung (17) im ersten Flugzeug-Referenzsystem (11) empfängt.

## Claims

1. A trimming method for balancing a first controllable, regulated reference system (11), having a controller (15) and an input device for the input of set defaults (28) for influencing controlled variables, with a second reference system (42), simulating the first reference system (11), having a controller (45) and a model (46) of the controlled process of the first reference system (11),
wherein in the first reference system state variables which comprise controlled variables and further state variables are acquired by a sensory mechanism (13),
wherein in an initial state the controller (45) of the second reference system (42) operates on the basis of control defaults communicated from the first reference system,
**characterised in that**
- the further state variables in the model (46) which is provided in the second reference system are converted (102a) into the further state variables of the first reference system, and
- subsequently the control defaults (54) supplied to the controller (45) of the second reference system (42) are acted upon over a predetermined period by values in the direction that results in a diminution of the deviation of state variables that has arisen by reason of the conversion (102a) of the further state variables.

2. Trimming method for balancing a first controllable, regulated reference system (11) with a second reference system (42) simulating the first reference system (11), according to Claim 1, **characterised in that** during the conversion (102a) of the further state variables and/or during the action upon the control defaults the control inputs for the first reference system remain effective.

3. Trimming method for balancing a first controllable, regulated reference system (11) with a second reference system (42) simulating the first reference system (11), according to Claim 1 or 2, **characterised in that** the conversion (102a) of the further state variables and/or the action upon the control defaults is/are terminated when a convergence criterion is attained.

4. Trimming method for balancing a first controllable, regulated reference system (11) with a second reference system (42) simulating the first reference system (11), according to Claim 1, 2 or 3, **characterised in that** the conversion of the further state variables is undertaken in the form of a loop (102a) within the action upon the control defaults for the first reference system (102b).

5. Trimming method for balancing a first controllable, regulated reference system (11) with a second reference system (42) simulating the first reference system (11), according to one of the preceding claims 1 to 3, **characterised in that** the conversion of the further state variables is undertaken in the form of a loop (102a) temporally after the action upon the control defaults for the first reference system (102b).

6. Trimming method for balancing a first controllable, regulated reference system (11) with a second reference system (42) simulating the first reference system (11), according to one of the preceding claims, **characterised in that** the initiation of the conversion (102a) of the further state variables is undertaken manually.

7. Trimming method for balancing a first controllable, regulated reference system (11) with a second reference system (42) simulating the first reference system (11), according to one of the preceding claims, **characterised in that** the controlled process of the first reference system is an aircraft actually flying and the state variables are state variables of flight.

8. Trimming method for balancing a first controllable, regulated reference system (11) with a second reference system (42) simulating the first reference system (11), according to Claim 7, **characterised in that** the control defaults influence the flow angles of the aircraft.

9. Trimming method for balancing a first controllable, regulated reference system (11) with a second reference system (42) simulating the first reference system (11), according to Claim 7, **characterised in that** the control defaults influence at least one acceleration or at least one rate of rotation of the aircraft.

10. Trimming method for balancing a first controllable, regulated reference system (11) with a second reference system (42) simulating the first reference system (11), according to Claim 7, 8 or 9, **characterised in that** the further state variables are constituted by Euler angles, a flight altitude at a given time, the Mach number and/or an absolute speed value.

11. A system for implementing a trimming method for balancing a first controllable, regulated reference system (11) having a controller (15), a sensory mechanism (13) for acquiring state variables which comprise controlled variables and further state variables, and an input device for the input of set defaults (28) for influencing controlled variables,
wherein the trimming system comprises a second reference system (42) simulating the first reference system (11), having a controller (45) and a model (46) of the controlled process of the first reference system (11), wherein in an initial state the controller (45) operates on the basis of control defaults communicated from the first reference system,
**characterised in that**
- the trimming system comprises functions for an operating mode with which the further state variables in the model (46) which is provided in the second reference system are converted (102a) into the further state variables of the first reference system (11), and
- a computation module (43) for ascertaining a deviation of the state variables is provided in the first (11) and second (42) reference systems, and the control defaults (54) supplied to the controller (45) of the second reference system (42) are capable of being changed independently of the control defaults of the first reference system (11) in order to act upon the control defaults over a predetermined period by values in the direction that results in a diminution of the deviation of state variables that has arisen by reason of the conversion (102a) of the further state variables.

12. System for implementing a trimming method according to Claim 11, **characterised in that**
- the controlled process of the trimming system is an aircraft model and the trimming system is provided for the purpose of adapting parameters of the aircraft model to the behaviour of a real aircraft, and
- the trimming system is functionally linked to a telemetry device (25) and receives from the latter control defaults (28) from the input device (17) in the first aircraft reference system (11).

## Revendications

1. Procédé d'équilibrage pour l'ajustage d'un premier système de référence commandé et régulé (11) comprenant un régulateur (15) et un dispositif d'entrée pour l'introduction de consignes nominales (28) pour exercer une influence sur des paramètres de réglage, avec un deuxième système de référence (42) simulant le premier système de référence (11) et comprenant un régulateur (45) et un modèle (46) du trajet de régulation du premier système de référence (11),
dans lequel, dans le premier système de référence, des paramètres d'état comprenant des paramètres de réglage et d'autres paramètres d'état sont détectés à l'aide d'un ensemble de capteurs (13) et
dans lequel, dans un état de départ, le régulateur (45) du deuxième système de référence (42) travaille sur la base de consignes de commande transmises par le premier système de référence,
**caractérisé**
- **en ce que**, dans le modèle (46) prévu dans le deuxième système de référence, les autres paramètres d'état sont transférés dans les autres paramètres d'état (102a) du premier système de référence et
- **en ce qu'**ensuite sont appliquées pour un temps prédéterminé aux consignes de commande (54) amenées au régulateur (45) du deuxième système de référence (42) des valeurs allant dans un sens qui conduit à une réduction de la déviation de paramètres d'état qui s'est produite du fait du transfert des autres paramètres d'état (102a).

2. Procédé d'équilibrage pour l'ajustage d'un premier système de référence commandé et régulé (11) avec un deuxième système de référence (42) simulant le premier système de référence (11) selon la revendication 1, **caractérisé en ce que**, pendant le transfert des autres paramètres d'état (102a) et/ou pendant l'application des consignes de commande, les entrées de commande pour le premier système de référence restent actives.

3. Procédé d'équilibrage pour l'ajustage d'un premier système de référence commandé et régulé (11) avec un deuxième système de référence (42) simulant le premier système de référence (11) selon la revendication 1 ou 2, **caractérisé en ce que** le transfert des autres paramètres d'état (102a) et/ou l'application des consignes de commande s'arrêtent lorsqu'un critère de convergence est atteint.

4. Procédé d'équilibrage pour l'ajustage d'un premier système de référence commandé et régulé (11) avec un deuxième système de référence (42) simulant le premier système de référence (11) selon la revendication 1, 2 ou 3, **caractérisé en ce que**, pendant le transfert des autres paramètres d'état comme boucle (102a) dans le cadre de l'application des consignes de commande, ont lieu les entrées de commande pour le premier système de référence (102b).

5. Procédé d'équilibrage pour l'ajustage d'un premier système de référence commandé et régulé (11) avec un deuxième système de référence (42) simulant le premier système de référence (11) selon l'une quelconque des revendications précédentes 1 à 3, **caractérisé en ce que** le transfert des autres paramètres d'état en tant que boucle (102a) a lieu chronologiquement après l'application des consignes de commande pour le premier système de référence (102b).

6. Procédé d'équilibrage pour l'ajustage d'un premier système de référence commandé et régulé (11) avec un deuxième système de référence (42) simulant le premier système de référence (11) selon l'une quelconque des revendications précédentes, **caractérisé en ce que** le démarrage du transfert des autres paramètres d'état (102a) a lieu manuellement.

7. Procédé d'équilibrage pour l'ajustage d'un premier système de référence commandé et régulé (11) avec un deuxième système de référence (42) simulant le premier système de référence (11) selon l'une quelconque des revendications précédentes, **caractérisé en ce que** le trajet de régulation du premier système de référence est un avion volant effectivement et que les paramètres d'état sont des paramètres d'état pour le vol.

8. Procédé d'équilibrage pour l'ajustage d'un premier système de référence commandé et régulé (11) avec un deuxième système de référence (42) simulant le premier système de référence (11) selon la revendication 7, **caractérisé en ce que** les consignes de commande exercent une influence sur les angles d'écoulement de l'avion.

9. Procédé d'équilibrage pour l'ajustage d'un premier système de référence commandé et régulé (11) avec un deuxième système de référence (42) simulant le premier système de référence (11) selon la revendication 7, **caractérisé en ce que** les consignes de commande exercent une influence sur au moins une accélération ou sur au moins un rapport de rotation de l'avion.

10. Procédé d'équilibrage pour l'ajustage d'un premier système de référence commandé et régulé (11) avec un deuxième système de référence (42) simulant le premier système de référence (11) selon la revendication 7, 8 ou 9, **caractérisé en ce que** les autres paramètres d'état sont des angles d'Euler, une altitude momentanée de vol, le nombre de Mach et/ou une valeur de vitesse.

11. Système pour la réalisation d'un procédé d'équilibrage pour l'ajustage d'un premier système de référence commandé et régulé (11) comprenant un régulateur (15), un système de capteurs (13) pour la détection de paramètres d'état, qui comprennent des paramètres de réglage et d'autres paramètres d'état, et un dispositif d'entrée pour l'introduction de consignes nominales (28) pour exercer une influence sur des paramètres de réglage,
dans lequel le système d'équilibrage comprend un deuxième système de référence (42) simulant le premier système de référence (11) avec un régulateur (45) et un modèle (46) du trajet de régulation du premier système de référence (11) et
dans lequel, dans un état de départ, le régulateur (45) travaille sur la base de consignes de commande transmises par le premier système de référence,
**caractérisé**
- **en ce que** le système d'équilibrage comprend des fonctions pour un mode de fonctionnement avec lequel les autres paramètres d'état sont transférés dans le modèle (46) prévu dans le deuxième système de référence dans les autres paramètres d'état (102a) du premier système de référence (11) et
- **en ce qu'**il est prévu un module de calcul (43) pour déterminer une déviation des paramètres d'état dans le premier système de référence (11) et dans le deuxième système de référence (42) et que les consignes de commande (54) amenées au régulateur (45) du deuxième système de référence (42) peuvent être modifiées indépendamment des consignes de commande du premier système de référence (11), et ceci pour appliquer pour un temps prédéterminé aux consignes de commande des valeurs allant dans un sens qui conduit à une réduction de la déviation de paramètres d'état qui s'est produite du fait du transfert des autres paramètres d'état (102a).

12. Système pour la réalisation d'un procédé d'équilibrage selon la revendication 11, **caractérisé**
- **en ce que** le trajet de régulation du système d'équilibrage est un modèle d'avion et que le système d'équilibrage est prévu pour une adaptation de paramètres du modèle d'avion au comportement d'un avion réel et
- **en ce que** le système d'équilibrage est en liaison fonctionnelle avec un dispositif de télémétrie (25) et reçoit de celui-ci des consignes de commande (28) du dispositif d'entrée (17) se trouvant dans le premier système de référence d'avion (11).
